# FASCICULE DE BREVET EUROPEEN

(11) **EP 2 277 729 B1**
(45) Date de publication et mention de la délivrance du brevet: **19.11.2014**
(21) Numéro de dépôt: 10151348.9
(22) Date de dépôt: 21.01.2010
(51) Int. Cl.: B60J 1/16

(54) **Dispositif d'obturation d'une baie ménagée dans la carrosserie d'un véhicule automobile comprenant des moyens d'équilibrage, et véhicule automobile correspondant**
Vorrichtung zum Schliessen einer in die Karosserie eines Fahrzeugs eingelassenen Öffnung mit Ausgleichsmitteln, und entsprechendes Kraftfahrzeug
Device for closing an opening made in the body of an automobile comprising balancing means, and corresponding automobile

(30) Priorité: 19.06.2009 EP 09163306; 11.09.2009 EP 09170132; 16.10.2009 EP 09173357
(43) Date de publication de la demande: 26.01.2011
(73) Titulaire: Advanced Comfort Systems France SAS - ACS France, 79302 Bressuire Cedex (FR)
(72) Inventeur: Maltaverne, Guy, 79300, BRESSUIRE (FR); Gerbeau, Serge, 79300, SAINT-SAUVEUR (FR); Giret, Frédéric, 79300, BRESSUIRE (FR); Desbois, Mickaël, 79200, PARTHENAY (FR)
(74) Mandataire: Bioret, Ludovic

(56) Documents cités:
- EP-A1- 0 972 663
- EP-A2- 1 643 064
- WO-A1-2009/074625
- CA-A1- 2 535 229
- FR-A1- 2 385 870
- US-A- 5 613 323
- US-A- 5 724 769
- US-A1- 2004 144 034
- US-A1- 2009 019 780

## Description

### 1. Domaine de l'invention

Le domaine de l'invention est celui des baies de véhicules automobiles. Plus précisément, l'invention concerne les dispositifs d'obturation d'une baie ménagée dans la carrosserie d'un véhicule, ou dans une portière du véhicule, et comprenant une partie mobile coulissante susceptible de libérer ou de fermer une ouverture en offrant un aspect affleurant, vu de l'extérieur. De tels dispositifs, développés depuis plusieurs années par le titulaire de la présente demande, sont notamment connus sous le terme "baie flush".

### 2. Techniques de l'art antérieur

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

La technique la plus couramment répandue pour l'ouverture et la fermeture d'une vitre de portière est de rendre celle-ci mobile verticalement dans son propre plan, en la faisant pénétrer ou sortir du caisson ou de la garniture de la portière. On connaît également des panneaux coulissants horizontalement, le long de rails formés dans un cadre.

Cette technique est aujourd'hui couramment utilisée et des solutions pour l'automatiser sont connues. L'équipement des automobiles en vitres électriques est aujourd'hui très répandu.

Cette technique présente cependant de nombreux inconvénients relatifs, notamment, aux problèmes d'étanchéité et/ou en termes d'esthétique.

Une autre technique a donc été proposée par le titulaire de la présente demande de brevet. Le principe de cette technique est notamment décrite dans les documents de brevet EP-0 778 168 et EP-0 857 844. Le dispositif d'obturation (appelé par la suite "baie flush") présenté dans ces documents comprend une structure fixe et une partie, ou panneau coulisseau, mobile par rapport à cet ensemble fixe. La partie mobile est reliée à l'ensemble fixe par des éléments fonctionnels qui assurent la mobilité requise et qui sont rapportés sur la face de la partie fixe tournée vers l'intérieur du véhicule.

Une telle baie flush peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP-1 022 172. On résout ainsi la plupart des problèmes d'étanchéité identifiés plus haut. La même approche peut aussi être utilisée pour réaliser des pavillons, et notamment des pavillons vitrés munis d'une ouverture.

Sur le plan esthétique, la baie flush présente, vue de l'extérieur, un aspect lisse, affleurant, du fait qu'aucun cadre n'est nécessaire sur le contour de l'ouverture formée dans l'ensemble fixe.

Pour assurer un coulissement de la partie mobile, constituée généralement par un panneau transparent, on prévoit par exemple un dispositif de guidage comportant un premier et un second rail de guidage montés fixes sur l'ensemble fixe (ou structure fixe) de la baie, de part et d'autre de l'ouverture fermée par le panneau mobile. Celui-ci est monté sur les rails, pour coulisser par exemple selon une direction longitudinale, dans un plan de coulissement entre une (ou plusieurs) position d'ouverture et une position intermédiaire de dégagement dans laquelle il est en regard de la baie et dégagé de celle-ci.

On notera qu'il a été envisagé de déplacer la partie mobile entre la position d'obturation et la position intermédiaire de dégagement suivant principalement deux techniques :
- une première technique pour laquelle le déplacement de la partie mobile est une combinaison d'un mouvement dans une direction parallèle au plan de la partie fixe et d'un mouvement dans une direction perpendiculaire à ce plan, sous la forme d'un mouvement général de louvoiement, selon lequel le bord distal de la partie mobile se trouve, en fin de course, dans le plan de la baie (la partie mobile étant alors « en travers », entre le plan d'obturation et le plan de coulissement). Il suffit alors de ramener le bord proximal, par exemple manuellement, pour assurer l'obturation ; et
- une deuxième technique pour laquelle la partie mobile reste constamment dans un plan sensiblement parallèle au plan de la partie fixe lors de son déplacement.

L'invention se rapporte plus particulièrement à cette deuxième technique d'obturation, à ses variantes et ses perfectionnements.

Le titulaire a en effet proposé une amélioration du guidage et du verrouillage de telles « baies flush », décrite notamment dans le document WO 2009/074625 A1 qui correspond au préambule de la revendication indépendante.

Selon cette approche, la baie flush comprend une structure fixe dans laquelle est définie une ouverture, et au moins un panneau coulissant, présentant un cadre portant au moins un pion de guidage (généralement deux pions en partie supérieure et deux pions en partie inférieure). Deux coulisseaux, ou navettes, solidaires des pions sont prévus, et assemblés de façon à permettre un mouvement relatif des coulisseaux par rapport à un élément de guidage correspondant, suivant l'axe de coulissement du panneau coulissant, de façon à permettre un déplacement dudit ledit panneau coulissant suivant une direction perpendiculaire au plan de ladite structure fixe.

Ainsi, le panneau coulissant est solidarisé directement à un élément de guidage et à au moins un coulisseau, par l'intermédiaire des pions de guidage, guidés dans un chemin de rail de forme simple, sensiblement rectiligne, afin d'assurer sa mise en mobilité dans la direction de l'axe de coulissement ou perpendiculairement au plan de la structure fixe.

On notera que le terme « plan » doit ici s'entendre dans une acception élargie : le plan formé par la baie est parfois courbe, selon une, voire deux, directions (cela justifie également, dans certains cas, le terme « sensiblement » utilisé dans la description et les revendications).

Ce dispositif permet donc de faire reposer le panneau coulissant sur une surface élargie du rail, par l'intermédiaire de l'élément coulissant et du coulisseau et de mettre en oeuvre des rails d'épaisseur réduite correspondant sensiblement à l'épaisseur du coulisseau ou de l'élément coulissant et/ou à l'épaisseur prévue pour le collage du rail sur la structure fixe.

### 3. Inconvénients des solutions de l'art antérieur

Cette technique intéressante s'avère cependant difficile à mettre en oeuvre de façon industrielle, tant pour une baie flush manuelle que pour une baie flush motorisée (encore dite « électrique »).

En effet, le panneau mobile a tendance à s'arc-bouter dans les rails, lorsque l'actionnement de la poignée n'est pas effectué parfaitement au centre de la poignée, c'est-à-dire à égale distance des deux navettes. Lorsque l'actionnement est décentré, les efforts appliqués sur chaque navette sont différents, ce qui peut conduire à un arc-boutement du panneau mobile, voire à un blocage complet de celui-ci.

Il n'est cependant pas aisé de contrôler que l'utilisateur effectue un actionnement centré, en particulier pour une poignée telle que celle décrite dans le document WO 2009/074625 A1, déjà cité, qui s'étend sur toute la hauteur du panneau coulissant.

Ce risque d'arc-boutement est renforcé par les tolérances importantes imposées dans le domaine de l'automobile, qui ne permettent pas un ajustement fin de chaque baie, mais exigent au contraire des jeux de plusieurs millimètres.

Dans ces nombreux modes de réalisation, il est par ailleurs nécessaire que les rails de guidage du panneau mobile ne soient pas parallèles, ce qui rajoutent une contrainte supplémentaire, et augmente encore ce risque d'arc-boutement.

Le problème est similaire dans le cas des baies flush électriques. L'action apportée sur la navette inférieure, comme proposé dans le document WO 2009/074625 A1, risque d'être différente de celle appliquée à la navette supérieure par l'intermédiaire de la traverse, ce qui peut conduire à un arc-boutement et/ou un blocage.

De ce fait, la fabrication de ces baies et leur intégration sur le véhicule sont généralement complexes et coûteuses.

Un autre inconvénient de cette technique de l'art antérieur est qu'elle nécessite, notamment dans une mise en oeuvre manuelle, un cadre et/ou une poignée relativement épais, nuisant au clair de baie et, dans certains cas, à l'esthétique.

### 4. Objectifs de l'invention

L'invention a donc notamment pour objectif de pallier les inconvénients de l'art antérieur cités ci-dessus.

Plus précisément, l'invention a pour objectif de proposer une technique permettant d'améliorer le déplacement en coulissement du panneau mobile d'un dispositif d'obturation d'une véhicule automobile, ou baie flush, notamment en évitant les arcs-boutements du panneau mobile et/ou son blocage.

Un autre objectif de l'invention est de fournir un tel dispositif d'obturation d'une baie qui soit simple à monter sur une portière, sur une paroi ou sur un pavillon d'un véhicule, et qui permette une utilisation aisée et fiable.

L'invention a également pour objectif de fournir un tel dispositif d'obturation, dont le mécanisme d'actionnement d'ouverture/fermeture et/ou du coulissement soit simple et fiable.

En particulier, un objectif de l'invention est de fournir un tel dispositif d'obturation, qui fonctionne de façon efficace malgré des jeux éventuellement importants.

Encore un autre objectif de l'invention est de fournir un tel dispositif d'obturation d'une baie qui conserve l'ensemble des avantages des "baies flush" déjà développées par le titulaire de la présente demande, et notamment :
- aspect esthétique affleurant ;
- aspects aérodynamiques ;
- facilité et coût réduit de fabrication ;
- facilité et coût réduit de montage.

### 5. Principes généraux de l'invention

Ces objectifs, ainsi que d'autres qui apparaîtront par la suite, sont atteints à l'aide d'un dispositif d'obturation d'une baie ménagée dans la carrosserie d'un véhicule automobile, comprenant une structure fixe dans laquelle est définie une ouverture, et au moins un panneau coulissant présentant :
- deux navettes, dites navette supérieure et navette inférieure, guidées respectivement dans deux rails de guidage distincts montés et/ou formés sur la face de ladite structure fixe tournée vers l'intérieur dudit véhicule respectivement en partie supérieure et en partie inférieure de ladite structure fixe ;
- un cadre portant au moins deux pions de guidage coopérant respectivement avec chacune desdites navettes, ces dernières comprenant des moyens de guidage desdits pions permettant un déplacement transversal dudit cadre par rapport auxdites navettes;
- des moyens d'actionnement agissant sur lesdites navettes pour assurer un déplacement de ces dernières dans lesdits rails, entraînant un déplacement dudit panneau coulissant suivant une direction perpendiculaire au plan de ladite structure fixe,
où le dispositif d'obturation comprend des moyens d'équilibrage desdits moyens d'actionnement, de façon à équilibrer le déplacement desdites navettes,
en ce que lesdits moyens d'actionnement comprennent au moins une poignée de déverrouillage et de déplacement placée sur une portion du cadre du panneau coulissant parallèle à au moins un desdits rails de guidage, ladite poignée présentant deux éléments de préhension montés dans un logement ménagé dans la partie basse et/ou haute du cadre du panneau coulissant, mobiles l'un par rapport à l'autre et par rapport audit cadre parallèlement à l'axe de déplacement du panneau coulissant et pouvant prendre une position verrouillée, par défaut, et une position déverrouillée lorsqu'ïls sont rapprochés l'un de l'autre,
lesdits moyens d'actionnement assurant un actionnement direct sur une première desdites navettes,
et en ce que lesdits moyens d'équilibrage comprennent des moyens de synchronisation assurant une transmission d'un actionnement transmis sur la seconde desdites navettes.

Cette approche permet d'assurer un montage simple et efficace, avec un rail pouvant être de dimension réduite et essentiellement rectiligne (la navette se déplace de façon sensiblement rectiligne dans le rail, et le déplacement d'ouverture / fenneture, ou changement de plan, est assuré par la coopération entre les pions et les navettes).

Selon l'invention, le dispositif d'obturation comprend des moyens d'équilibrage desdits moyens d'actionnement, de façon à équilibrer le déplacement desdites navettes.

Ainsi, on assure un déplacement équilibré des navettes, par exemple en appliquant, des efforts identiques, ou à tout le moins suffisamment similaires aux deux navettes, et on évite les arcs-boutements et les blocages du panneau coulissant dans les rails, même en présence de jeux relativement importants.

Comme on le verra par la suite, ceci permet d'actionner le panneau coulissant de façon efficace, manuellement ou de façon motorisée, sans nécessiter un placement particulier et une manipulation centrale de la poignée.

Selon une caractéristique particulière de l'invention, lesdits moyens d'actionnement comprennent une portion de liaison reliant lesdites navettes, et s'étendant entre lesdits rails, perpendiculairement à l'axe de déplacement desdites navettes. Dans ce cas, au moins une partie desdits moyens d'équilibrage sont portés par et/ou logés dans ladite portion de liaison.

Cette portion de liaison peut notamment être une partie du cadre.

Selon un premier mode de réalisation avantageux, lesdits moyens d'équilibrage comprennent au moins un câble d'équilibrage circulant dans ladite pièce de liaison, entre au moins deux éléments de guidage prévus à cet effet sur ladite portion de liaison.

Notamment, lesdits moyens d'équilibrage comprennent deux câbles d'équilibrage se croisant dans ladite pièce de liaison et se prolongeant dans et/ou le long desdits rails.

Ce ou ces câbles, selon leur montage, permettent de contrôler efficacement et de façon simple l'équilibrage des efforts entre les deux navettes, et d'éviter les arcs-boutements.

De façon préférentielle, lesdits éléments de guidage sont des poulies.

Selon une variante particulière, la baie flush comprend des moyens de blocage dudit panneau coulissant en toutes positions d'ouverture, agissant sur lesdits moyens d'équilibrage.

Ces moyens de blocage en toute position peuvent notamment être adaptés pour empêcher le déplacement du panneau mobile en cas d'un freinage d'urgence.

Selon différents mise en oeuvre, lesdits moyens de blocage agissent sur au moins un desdits câbles, et/ou sur au moins un élément porté par un desdits câbles et/ou sur au moins un desdits éléments de guidage.

Le cadre peut, notamment dans ce cas, porter une poignée de déverrouillage et de déplacement dudit panneau coulissant, pouvant prendre une position verrouillée, par défaut, et une position déverrouillée, et en ce que ladite poignée contrôle lesdits moyens de blocage.

Selon un deuxième mode de réalisation de l'invention, lesdits moyens d'actionnement assurent un actionnement direct sur une première desdites navettes, et lesdits moyens d'équilibrage comprennent des moyens de synchronisation assurant une transmission d'un actionnement transmis sur la seconde desdites navettes.

A nouveau, on obtient ainsi un équilibrage efficace entre les deux navettes, bien que le montage des moyens d'actionnement soit asymétrique.

Lesdits moyens de synchronisation peuvent notamment comprendre un câble push-pull et/ou une lame ressort.

Selon un troisième mode de réalisation de l'invention, lesdits moyens d'équilibrage comprennent au moins une lame ressort reliée d'une part à une poignée et d'autre part à l'une desdites navettes.

Dans au moins un mode de réalisation particulier de l'invention, lesdits moyens d'équilibrage comprennent une lame ressort dont chaque extrémité est reliée à une desdites navettes, ladite poignée agissant sur ou au voisinage de la portion centrale de ladite lame ressort.

Selon un aspect particulier de l'invention, ladite poignée imprime à ladite lame ressort un déplacement sensiblement parallèle à l'axe de coulissement du panneau coulissant.

Selon un quatrième mode de réalisation de l'invention, lesdits moyens d'actionnement comprennent au moins une poignée de déverrouillage et de déplacement placée sur une portion du cadre du panneau coulissant parallèle à au moins un desdits rails de guidage.

Ladite poignée peut notamment comprendre deux éléments de préhension qui pouvent prendre une position verrouillée, par défaut, et une position déverrouillée lorsqu'ils sont rapprochés l'un de l'autre.

Selon certaines mises en oeuvre, lesdits moyens d'actionnement sont entraînés par au moins un moteur électrique. Il est à noter que la structure de l'invention permet, à partir d'une même base, de fournir des baies manuelles et des baies motorisées, sans modification ni adaptation complexe.

L'invention concerne également les véhicules automobiles comprenant au moins un dispositif d'obturation tel que décrit ci-dessus. Ce dispositif peut notamment être monté sur une paroi latérale du véhicule ou une portière, ou former tout ou partie d'un pavillon.

### 6. Liste des figures

D'autres caractéristiques et avantages de l'invention apparaîtront plus clairement à la lecture de la description suivante de quatre modes de réalisation particuliers de l'invention et de quelques exemples de variantes, donnés à titre de simples exemples illustratifs et non limitatifs, et des dessins annexés, parmi lesquels :
- les figures 1A et 1B illustrent, dans une représentation en perspective, un mode de réalisation d'un dispositif d'obturation tel que décrit dans le document WO 2009/074625 A1, respectivement en position d'obturation de l'ouverture et dans une position d'ouverture partielle ;
- la figure 2 est une vue de détail de la partie inférieure du dispositif d'obturation présenté en figures 1A et 1B ;
- la figure 3 illustre schématiquement le guidage appliqué à un pion du dispositif d'obturation de la figure 2 ;
- la figure 4 présente un exemple de baie flush à rails non parallèles, à laquelle l'invention peut s'appliquer ;
- la figure 5 présente un premier mode de réalisation d'une baie flush selon l'invention, mettant en oeuvre des moyens d'équilibrage comprenant deux câbles d'équilibrage ;
- la figure 6 illustre une version motorisée de la baie flush de la figure 5 ;
- la figure 7 présente un deuxième mode de réalisation d'une baie flush, mettant en oeuvre des moyens d'équilibrage comprenant des moyens de transmission ;
- la figure 7.1 à 7.4 sont des vues de détail, respectivement du coin inférieur droit, du coin supérieur droit, du coin inférieur gauche et du coin supérieur gauche de la baie flush présenté figure 7;
- les figures 7.5 à 7.7 illustrent la baie flush de lafigure 7;
- la figure 7.8 détaille la poignée de la baie flush présentée figure 7 ;
- la figure 8 illustre une version motorisée de la baie flush de la figure 7 ;
- les figures 9 et 10 illustrent deux baies motorisées, dans lesquelles les navettes sont chacune contrôlées par un câble actionné par un même moteur ;
- la figure 11 illustre la conversion d'une version manuelle en version motorisée ;
- les figures 12.1 et 12.2 concernent une autre variante d'une baie flush;
- la figure 13 illustre une autre baie flush mettant en oeuvre une poignée agissant directement sur les moyens d'équilibrage, et montée sensiblement à égale distance entre les deux navettes ;
- la figure 14 illustre le mode de réalisation de l'invention, mettant en oeuvre une poignée comprenant deux éléments de préhension pouvant être rapprochés l'un de l'autre ;
- les figures 15 à 17 sont des vues de détail de la partie basse du cadre du panneau mobile et du rail de guidage inférieur du mode de réalisation présenté figure 14 ;
- la figure 18 est une vue en perspective du coulisseau formant navette et d'un élément de préhension du mode de réalisation présenté figure 14.

### 7. Description de modes de réalisation particuliers

### 7.1 Rappel : baie flush équipée de navettes

Comme déjà mentionné, l'invention s'applique particulièrement aux baies flush équipées de navettes, telles que décrites dans le document WO 2009/074625 A1, déjà mentionné.

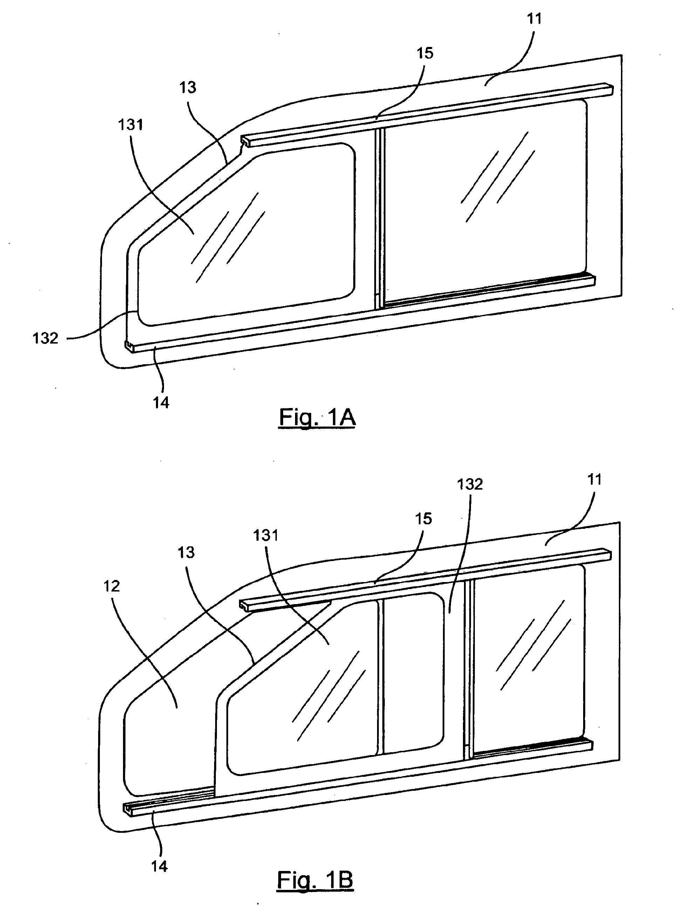

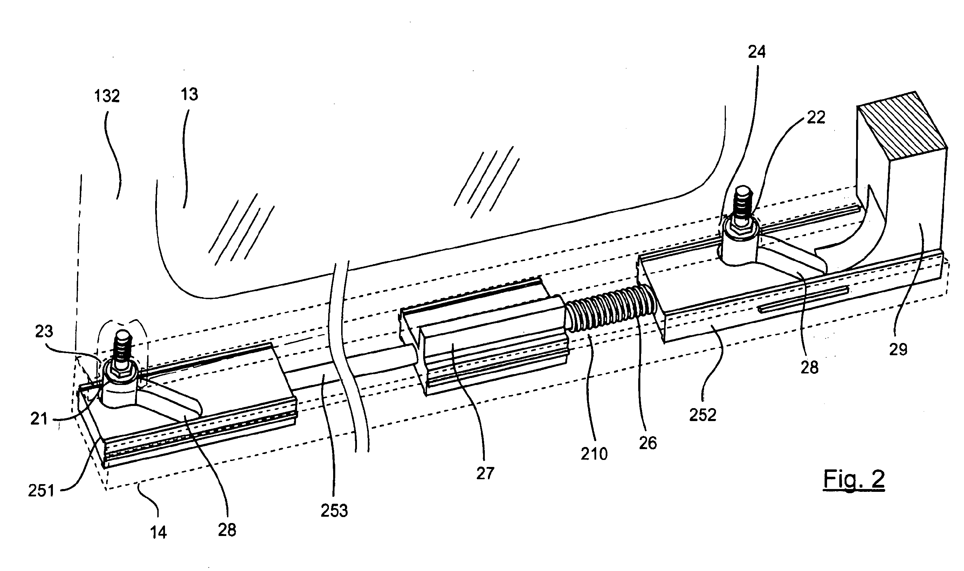

On rappelle cependant ci-après les aspects essentiels de cette technique, en relation avec les figures 1A, 1B et 2.

Le principe général de cette technique, dans sa version utilisée dans le cadre de l'invention, repose notamment sur la mise en oeuvre de deux coulisseaux d'entraînement, ou navette, d'un ou plusieurs pions de guidage solidaires du panneau coulissant et d'un élément de guidage du panneau guidés suivant l'axe du rail, et mobiles l'un par rapport à l'autre pour permettre le déplacement du panneau coulissant dans la direction perpendiculaire au plan de la structure fixe.

Les figures 1A et 1B illustrent, dans une vue en perspective, un mode de réalisation d'une telle baie flush à ouverture manuelle, destiné à obturer une baie ménagée dans une paroi latérale de la carrosserie d'un véhicule. Ce dispositif d'obturation comprend donc une structure fixe 11, généralement en matériau transparent, encore appelée ensemble fixe ou panneau fixe, dans laquelle est percée une ouverture 12. Un panneau coulissant 13 mobile par rapport à cette structure fixe, permettant d'obturer complètement l'ouverture (voir figure 1A), est prévu pour coulisser et libérer partiellement (voir figure 1B) ou totalement cette ouverture.

Le panneau coulissant comprend une vitre 131 munie d'un cadre 132, pouvant être guidé le long de deux rails sensiblement parallèles 14 et 15, montés sur la face intérieure de la structure fixe 11 respectivement en partie inférieure et en partie supérieure. Dans une variante, ces rails peuvent également être non parallèles.

La figure 2 illustre le détail de la partie inférieure de cette baie flush, dans laquelle le cadre 132 du panneau coulissant et le rail 14 sont représentés en traits pointillés, la partie supérieure pouvant être déduite par simple symétrie.

Le panneau coulissant 13 présente dans sa partie inférieure deux pions de guidage 21 et 22, fixés au cadre 132 dans ce mode de réalisation de l'invention. Dans la position d'obturation de l'ouverture représentée sur cette figure, les pions 21 et 22 coopèrent avec deux gâches traversantes identiques 23 et 24 formées dans l'épaisseur du rail 14 pour assurer le verrouillage du panneau coulissant 13.

Un coulisseau, formant navette au regard de la position du panneau coulissant 13, est logé dans la glissière interne du rail 14, sensiblement à l'aplomb du panneau coulissant. Il comprend deux patins de guidage 251 et 252, liés rigidement par une barre de liaison 253.

Le patin 252 est solidaire d'une poignée 29. Elle s'étend le long du bord vertical du cadre 132 et relie le coulisseau inférieur au coulisseau supérieur, mobile dans le rail 15, au travers d'une rainure rectiligne 210 orientée suivant l'axe du rail 14, communicant à angle droit avec les gâches 23 et 24.

Un ressort hélicoïdal de rappel 26 (optionnel), monté autour de la barre 253, est logé entre le patin 252 du coulisseau et un élément 27 solidaire du cadre 132. Cet élément 27, mobile par rapport à la barre 253, qu'il chevauche, peut coulisser dans la glissière du rail 14.

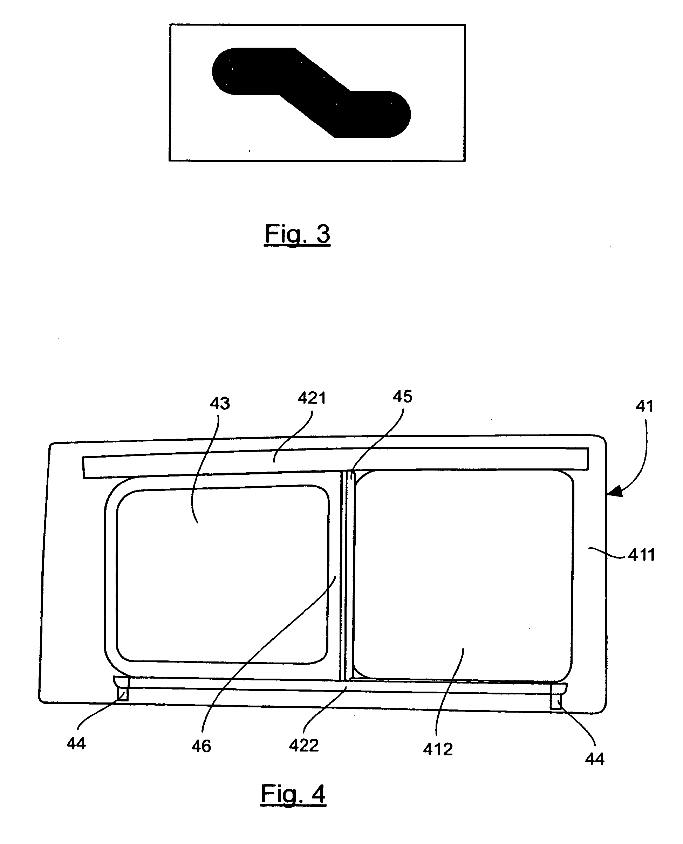

Une gorge de guidage 28, dont le profil est représenté schématiquement en figure 3, est formée dans chacun des patins 251, 252 pour recevoir la base de chaque pion 21, 22, débouchant sous la gâche.

Dans la position représentée sur la figure 2, la poignée 29 est relâchée. L'action du ressort 26 a repoussé le patin 252 vers la droite, le fond de la gorge 28 venant en butée sur les pions 21, 22. Chaque pion 21, 22 est alors immobilisé, la sortie de gâche étant disposée perpendiculairement à la direction de circulation dans la gorge.

D'autres précisions et variantes sont fournies dans le document WO 2009/074625 A1.

### 7.2 Principe de l'invention

Comme indiqué précédemment, un inconvénient de cette technique est qu'elle est soumise à des phénomènes d'arc-boutement et de blocage, lorsque les efforts appliqués sur les deux navettes ne sont pas symétriques et/ou que les rails sont non parallèles, comme sur la baie flush illustrée en figure 4.

Cette baie comprend donc une partie fixe 41, réalisée ici en deux parties, une première partie 411 définissant le contour de la baie, généralement dans un matériau opaque ou sérigraphié, et présentant une forme sensiblement trapézoïdale (la partie gauche étant moins large que la partie droite), ou rectangulaire, et une partie 412, transparente et fixe, inscrite dans une première ouverture définie dans la première partie.

La figure 4 illustre la baie vue de l'intérieur du véhicule. Sur cette surface de la structure fixe 41 orientée vers l'intérieur sont montés, par exemple par collage, deux rails de guidage et de maintien d'un panneau 43 mobile en coulissement par rapport à la structure fixe 41. Le rail supérieur 421 et le rail inférieur 422 sont ici non parallèles, pour suivre sensiblement les contours de la structure fixe 41 (eux-mêmes généralement imposés par la forme de carrosserie du véhicule).

Le rail inférieur 422 est notamment équipé de moyens de récupération et d'évacuation de l'eau 44. Le rail supérieur 421 est recouvert d'un bandeau de protection et de maintien, par exemple du type décrit dans le document FR 2937669 A1.

L'invention permet d'améliorer le contrôle du déplacement du panneau mobile 43, à l'aide de moyens d'équilibrage. Cette approche, bien qu'illustrée en relation avec des rails non parallèles, peut également, bien sûr, être mise en oeuvre dans le cadre de rails parallèles.

Comme on le verra par la suite, selon certains baies d'obturation, les moyens d'équilibrage de l'invention permettent également d'optimiser le freinage ou le blocage du panneau coulissant en toute position d'ouverture.

Selon la figure 4, qui présente une baie manuelle, le déverrouillage et le déplacement du panneau coulissant 43 sont assurés à l'aide de la poignée 45, ou barre de manoeuvre, qui s'étend entre les deux rails 421 et 422, le long du bord 46 du cadre du panneau mobile 43, cette poignée étant mobile par rapport au cadre, parallèlement à l'axe de déplacement du panneau mobile 43. La poignée 45 peut s'étendre au-delà du rail supérieur 421 et/ou du rail inférieur 422.

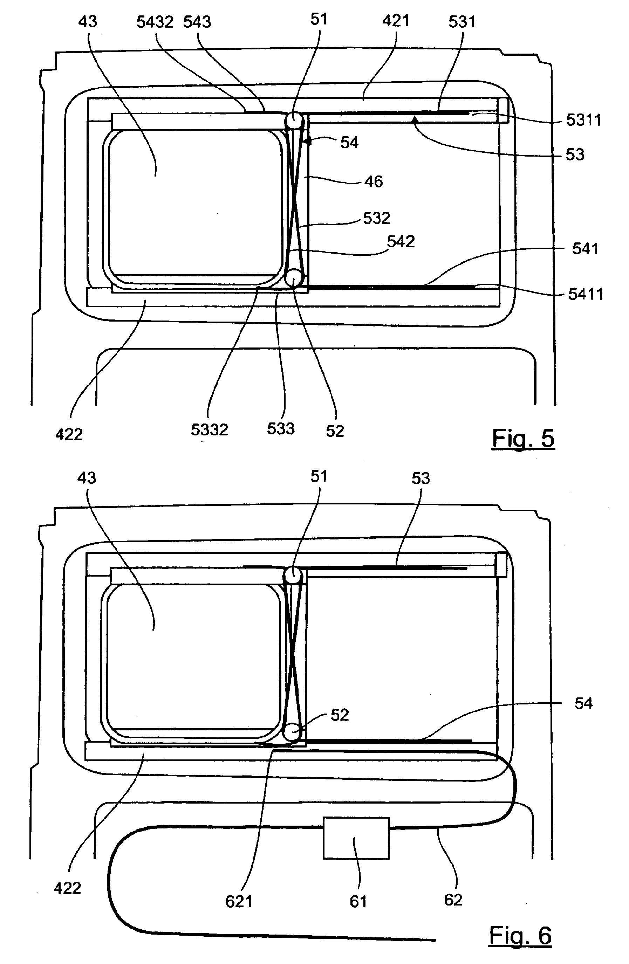

### 7.3 Figure 5

### 7.3.1 Équilibrage

Selon un premier mode de réalisation de l'invention, les moyens d'équilibrage sont montés dans la portion de cadre 46 (ou dans la poignée 45) comme illustré par la figure 5.

La portion de cadre 46 comprend donc un système d'équilibrage comprenant deux poulies 51 et 52 (ou plus généralement des moyens de guidage de câbles), qui coopèrent avec deux câbles d'équilibrage 53, 54 se croisant au milieu de la barre de tirage 11.

Le premier câble 53 présente une première portion 531 s'étendant le long du rail 421, depuis une première extrémité 5311 jusqu'à la poulie 51. Celle-ci renvoie une deuxième portion du câble 532 jusqu'à la seconde poulie 52. Une troisième portion du câble 533 s'étend depuis cette seconde poulie 52 jusqu'à une seconde extrémité 5332, parallèlement au rail 422.

Symétriquement, un second câble 54 s'étend depuis la première extrémité 5411 du rail 422 jusqu'à la poulie 52, puis transversalement jusqu'à la poulie 51, et enfin parallèlement au rail 421, jusqu'à la seconde extrémité 5432.

Les extrémités 5311, 5332, 5411 et 5432 des câbles sont fixés à la structure fixe, ou à un élément solidaire de celle-ci, en particulier les rails.

Les deux câbles 53 et 54 partagent les poulies 51 et 52, définissant ainsi un système d'équilibrage. Cette approche permet de garantir que les deux extrémités de la portion 46 du cadre, et donc l'ensemble du panneau coulissant, se déplacent de façon similaire et équilibrée.

Les poulies 51 et 52 reçoivent donc chacune, de façon croisée, les câbles d'équilibrage 53 et 54. Ainsi, elles se déplacent l'une et l'autre de la même distance, du fait de ces câbles croisés, assurant l'équilibrage requis.

Les poulies 51, 52 peuvent présenter un réa adapté pour recevoir les deux câbles 53, 54. Selon un autre mode de réalisation, les poulies peuvent présenter deux réas associés chacun à l'un des câbles.

### 7.3.2 Blocage toute position

Cette approche permet un maintien en toute position ouverte du panneau mobile, puisque, quelle que soit sa position, les poulies et les câbles assurent l'équilibrage.

Si le maintien dans une position quelconque apparaît insuffisant par rapport à un freinage d'urgence par exemple (il ne faut pas, en effet, que le panneau coulissant se déplace intempestivement, même en cas de freinage brusque), un système de blocage supplémentaire peut être prévu. Notamment, ce système de blocage peut agir sur les moyens d'équilibrage décrits ci-dessus.

Ainsi, selon un premier mode de réalisation, ces moyens de blocage peuvent agir sur une des poulies et préférentiellement les deux. On peut ainsi prévoir des patins de blocage, ou des éléments similaires, qui viennent en contact avec les poulies, de façon à empêcher leur rotation. Tant que ces patins de blocage sont en contact avec les poulies, celles-ci ne peuvent pas tourner, et le panneau coulissant ne peut donc pas être déplacé. Il peut également être prévu que les patins de blocage frottent sur au moins un rail ou sur au moins un câble.

Des moyens de déblocage sont prévus pour permettre de déplacer le panneau coulissant. Il peut par exemple s'agir de câbles ou de tiges, dont le déplacement est actionné par la poignée 45 (ou, le cas échéant, par une autre poignée). Préférentiellement, des moyens de rappel tendent à ramener les patins dans la position de blocage, lorsque la poignée n'est pas actionnée.

Selon une autre approche, les moyens de blocage peuvent agir sur l'un des câbles, ou sur les deux câbles. Il peut par exemple s'agir de moyens venant pincer l'un des câbles, entre les deux poulies, dans la position de blocage. Ce câble, ne pouvant se déplacer entre les deux poulies, assure l'immobilisation du panneau coulissant. La poignée, lorsqu'elle est actionnée, libère le câble en écartant les moyens de pincement, pour permettre à nouveau le déplacement du panneau coulissant.

Pour améliorer l'efficacité du freinage, il est possible de rajouter, sur au moins un des câbles, un élément présentant un fort coefficient de friction, pouvant coopérer avec un élément correspondant sur les moyens de pincement.

### 7.3.3 Actionnement

Dans la mesure où le système, et notamment la poignée, est actionnable en tous points entre le rail supérieur et le rail inférieur (et non uniquement par une portion centrale, comme cela était le cas selon l'art antérieur), le panneau coulissant peut par exemple être actionné en partie inférieure. Dans un mode de réalisation particulier, il est ainsi possible de placer une poignée dans cette portion inférieure.

Par ailleurs, ceci permet de réaliser simplement une version électrique ou motorisée de la baie flush, comme illustrée par la figure 6.

Sur cette figure 6, on a prévu un système de motorisation 61, qui entraîne un câble « push-pull », par exemple un câble cranté ou un câble multi toron, dans les deux sens de coulissement. L'extrémité 621 du câble 62 est reliée à la navette inférieure (non représentée) du panneau mobile, et le système d'équilibrage par câbles et poulies transmet, de façon équilibrée, l'action à la partie supérieure du panneau mobile.

### Figure 7

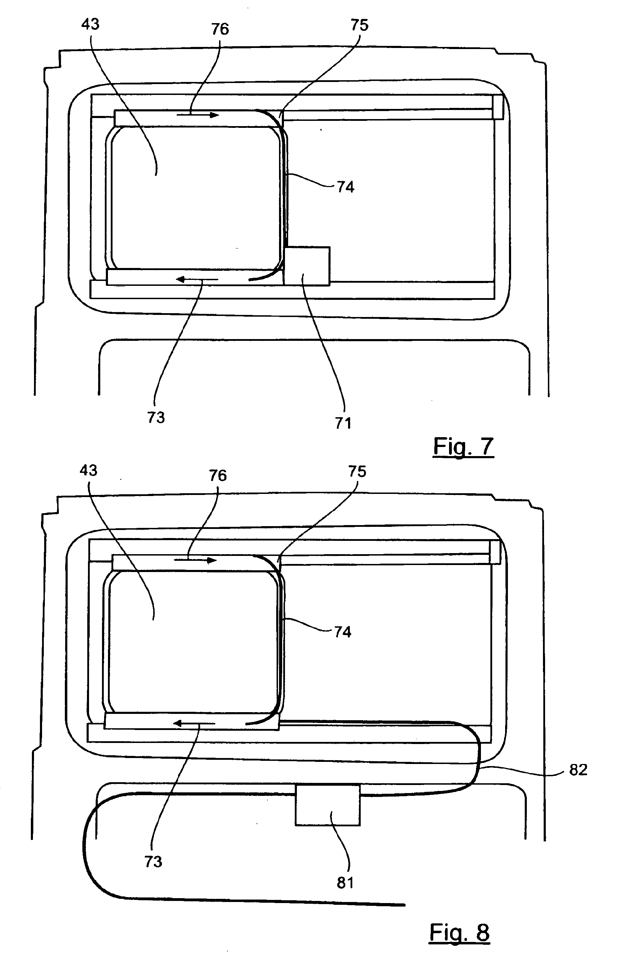

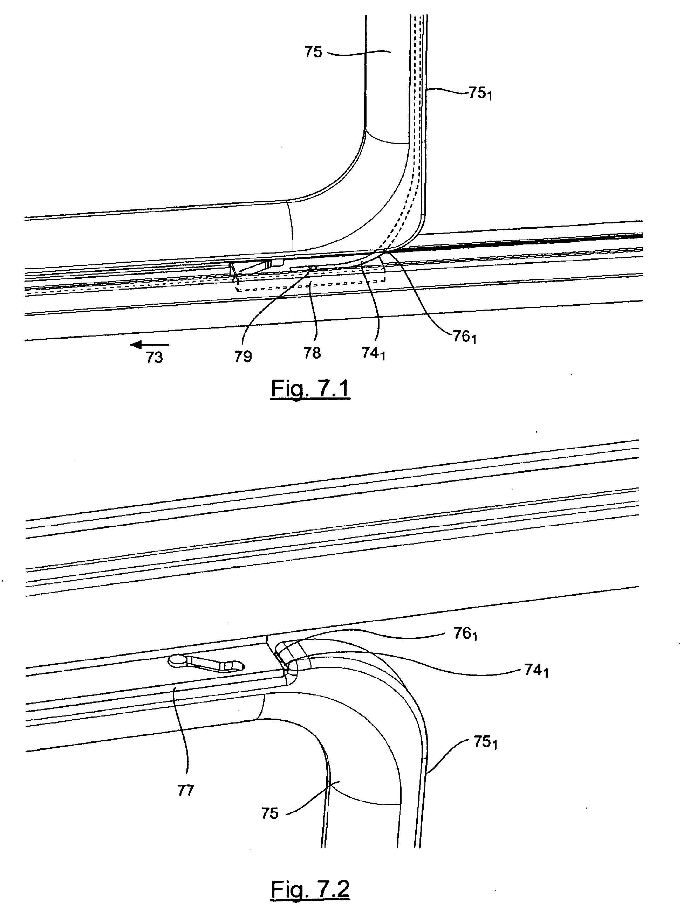

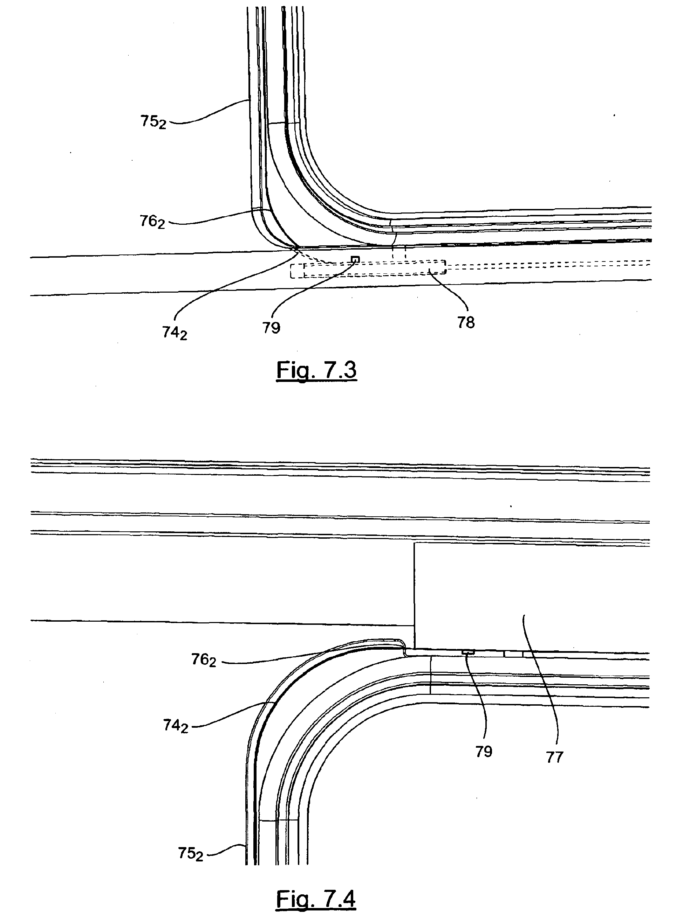

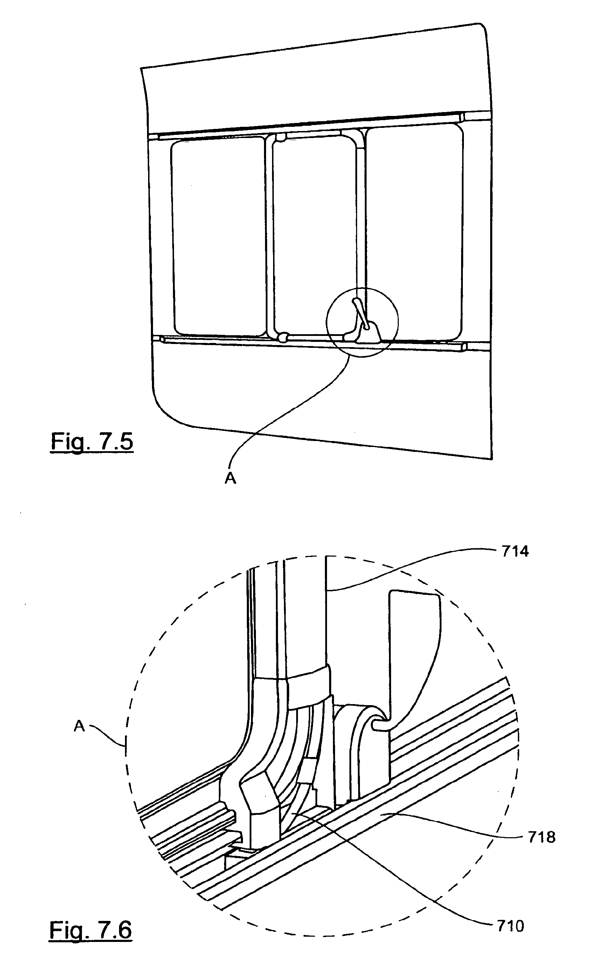

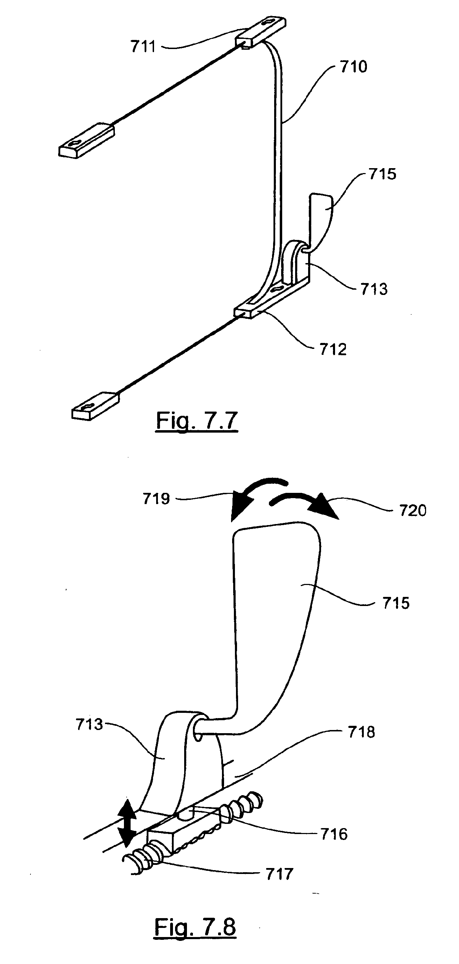

Selon la figure 7, on prévoit une poignée 71, montée en partie inférieure du panneau mobile 43, qui agit directement sur la navette inférieure (non représentée). Par exemple, un appui sensiblement horizontal sur la poignée 71, dans la direction de la flèche 73, assure le déplacement de cette navette par rapport au cadre.

Des moyens de synchronisation 74 assurant la transmission d'un actionnement transmis à l'une des navettes vers l'autre des navettes, encore appelés moyens de transmission dans la suite de la description, sont prévus entre la navette inférieure et la navette supérieure, par exemple sous la forme d'un câble de synchronisation, circulant dans le cadre 75 du panneau mobile 72.

Le câble de synchronisation 74 peut notamment être un câble « push-pull » va et vient, ou une lame ressort. Il peut également s'agir d'un élément de crémaillère associé à une poignée, par exemple une poignée rotative, sur laquelle est fixé un pignon d'actionnement, ou d'un mécanisme de crémone.

On comprend que, lorsque la poignée 71 applique un effort dans le sens de la flèche 73 sur la navette inférieure, la force appliquée, via le câble 74, à la navette supérieure sera dans un sens opposé (flèche 76). De ce fait, bien sûr, la forme de la gorge de guidage des pions (voir figure 3) doit être symétriquement inversée.

On a représenté figures 7.1 à 7.4, des vues des quatre coins du cadre, et respectivement du coin inférieur droit, du coin supérieur droit, du coin inférieur gauche et du coin supérieur gauche. Dans ce dispositif, une première lame ressort de synchronisation 74₁ est montée entre la navette supérieure 77 et la navette inférieure 78, sur le bord droit 75₁ du cadre 75 faisant face à la poignée 71 (voir les figures 7.1 et 7.2). Une seconde lame ressort 74₂ est par ailleurs montée entre les navettes sur le bord gauche du cadre 75₂ (voir les figures 7.3 et 7.4), de façon à exercer une traction sur la navette supérieure lorsque la poignée est poussée dans le sens opposé à celui de la flèche 73, afin de suppléer la première lame, qui travaille en poussée et est donc moins efficace, dans le déplacement de la navette 77.

La première 74₁ et la seconde lame ressort 74₂ sont obtenues à partir d'un clinquant en acier à ressort, permettant de concilier une rigidité satisfaisante et une épaisseur réduite. Elles sont guidées dans des rainures 76₁, 76₂ formées sur le bord droit 75₁ ou le bord gauche 75₂ du cadre, afin notamment de limiter les risques de flambage.

Ces lames 74₁, 74₂ sont fixées à chacune de leurs extrémités aux navettes, par des vis 79 dans cette mise en oeuvre particulière de l'invention. On note que tout autre procédé adapté tel que par exemple le collage, le rivetage, le bouterollage et/ou l'encastrement par surmoulage de la lame sur le cadre peut également être envisagé.

Les figures 7.5 à 7.7 illustrent un autre exemple de mise en oeuvre de ce deuxième mode de réalisation de l'invention, dans lequel on a prévu de mettre en oeuvre une seule lame ressort 710, montée sur le bord droit 714 du cadre (voir la figure 7.6, qui est une vue de détail A du coin inférieur droit du panneau mobile de la baie flush représentée dans son ensemble figure 7.5). Sur la figure 7.7, seules les navettes 711 et 712 reliées par la lame ressort 710, et la poignée 713 solidaire de la navette inférieure 712 ont été représentées, pour plus de clarté. Dans ce cas, la lame 710 agit sur la navette supérieure 711 en poussée et en traction (« push pull » en anglais), en transmettant l'actionnement transmis par la poignée 713 à la navette 712.

Si le blocage toute position apparaît insuffisant par rapport à un freinage d'urgence par exemple, on peut prévoir d'ajouter un système de poignée, par exemple une poignée à piston, assurant un indexage ou un freinage sur le rail inférieur et/ou sur une crémaillère logée dans le rail et/ou sur la lame. On a détaillé figure 7.8 un tel exemple de poignée à piston 713 équipant la baie flush présentée aux figures 7.5 et 7.7, à titre d'illustration.

Comme on peut le voir sur la figure 7.8, la poignée 713 porte un levier 715 ergonomique permettant d'actionner un piston 716 configuré pour pouvoir venir en prise avec un câble cranté formant crémaillère 717 fixe, logé dans le rail 718.

Pour bloquer le panneau mobile dans une position déterminée, il suffit ainsi d'abaisser le levier 715 dans le sens de la flèche 719. Ceci actionne en effet le piston 716, qui se déplace alors vers le bas et s'encastre dans les crans de la crémaillère 717, immobilisant la poignée 713. À l'inverse, on libère simplement le panneau mobile en relevant le levier 715 dans le sens de la flèche 720.

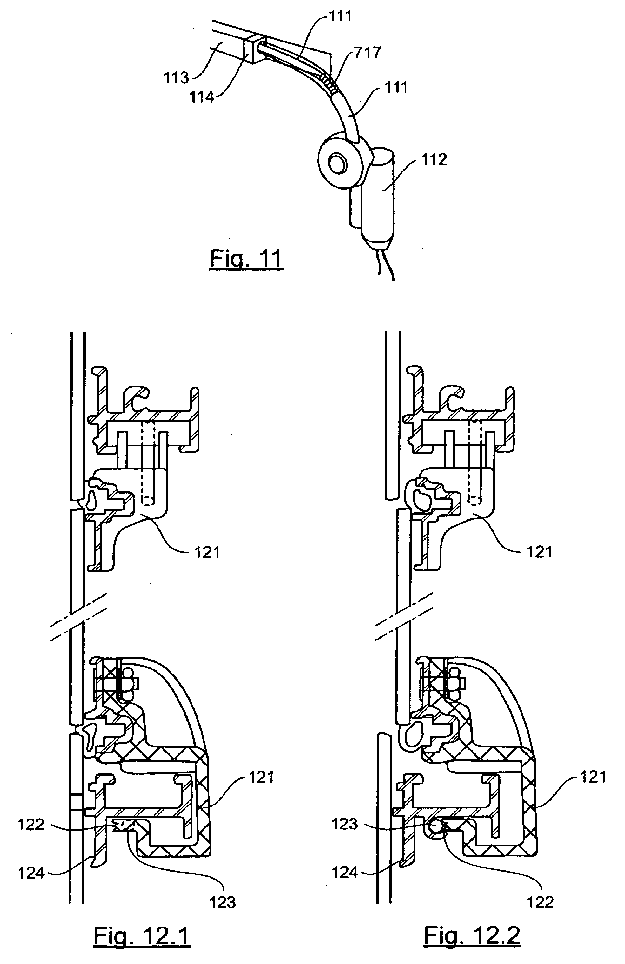

Dans une variante présenté en référence aux figures 7.5 à 7.8, la poignée de manoeuvre du panneau mobile peut être formée sur le cadre de ce dernier, par exemple en regard de la navette inférieure, à mi-distance des deux navettes, ou à hauteur de la navette supérieure. Un arrêt efficace en toute position d'ouverture position peut être assuré dans ce cas par le cadre 121 qui présente des crans 122 qui peuvent s'insérer dans des crans correspondants d'une tige de crémaillère 123 logée dans le rail inférieur 124, comme cela apparaît plus clairement sur la figure 12.2 dans une vue en coupe verticale de la baie flush en position d'ouverture. On peut noter que la tige 123 est sensiblement plus courte que le rail, pour permettre la fermeture de la baie flush (voir la figure 12.1, qui est une vue en coupe verticale de la baie flush dans la position d'obturation).

Ce dispositif d'obturation permet également, de façon simple, de prévoir une version motorisée, comme illustré par la figure 8. Les moyens de motorisation 81 entraînent un câble « push-pull » 82, cranté ou multi toron, qui agit sur la navette inférieure. Le câble de synchronisation 74 transmet un actionnement synchronisé à la navette supérieure.

Il est possible de proposer, sur une même base, une version manuelle et une version motorisée. En effet, comme on peut le voir par exemple en détail sur la figure 11, en reliant, via un guide d'entraînement 111 (représenté partiellement en coupe selon deux demi-plans radiaux), le câble formant crémaillère 717 à un moteur 112 fixé à l'extrémité avant du rail inférieur 113, on convertit la version manuelle en une version motorisée, pour un coût réduit. On peut par ailleurs rendre le guide d'entraînement plus rigide en prévoyant un élément de liaison 114 s'emboîtant sur le rail 113 dans lequel on insère une extrémité du guide d'entraînement.

Il convient de noter par ailleurs, tout comme les premier et troisième dispositifs d'obturation détaillés dans la présente description, ne sont pas limités à un type spécifique de baie flush, et peuvent notamment être mis en oeuvre dans le cas de baies flush présentant un contour rectangulaire ou de forme plus complexe, et/ou équipées de rails de guidage disposés parallèlement, ou s'écartant progressivement.

Par ailleurs, il peut également être envisagé, dans au moins un mode de réalisation particulier de l'invention, de solidariser la poignée directement et exclusivement sur les moyens de synchronisation, pour actionner les navettes.

### 7.5 Autre solution de motorisation

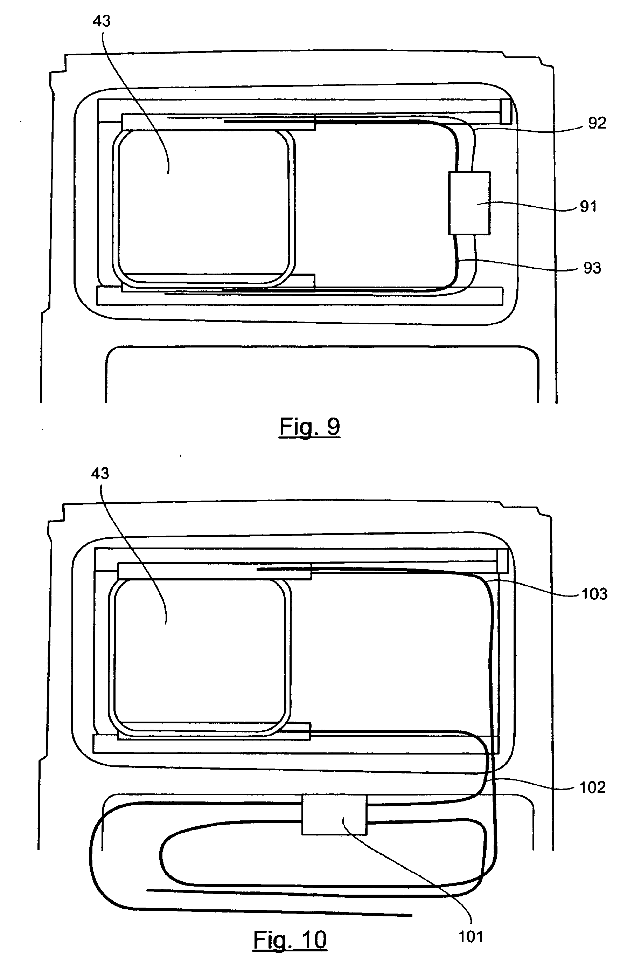

Il est possible, comme illustré par les figures 9 et 10 de prévoir deux éléments d'actionnement distincts, par exemple des câbles push-pull 92, 91 (figure 9) ou 102, 103 (figure 10) agissant chacun sur une des deux navettes et entraînés par un même moteur 91, 101. On applique ainsi un même effort aux deux navettes. Cette approche sera généralement réservée à des applications spécifiques, du fait que le passage du ou des câbles en partie supérieure de la baie est souvent peu aisé, et conduit à une réduction du clair de baie.

### Figure 13

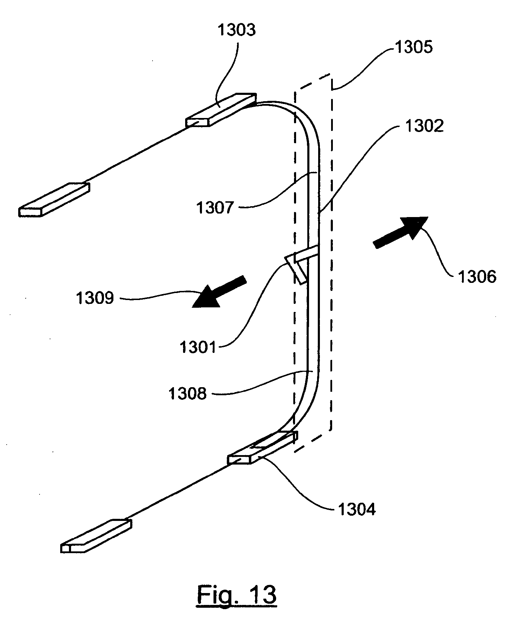

On présente en référence à la figure 13 un troisième dispositif d'obturation dans lequel la poignée agit directement sur les moyens de synchronisation des navettes.

Sur la figure 13, qui est une vue partielle de la baie flush, la poignée d'actionnement 1301 est montée sur une lame ressort de synchronisation 1302, sensiblement à égale distance des deux navettes 1303 et 1304. On peut également prévoir dans une variante de ce dispositif d'obturation, de monter la poignée entre deux lames ressort fixées respectivement à l'une ou l'autre des navettes.

Lorsqu'on tire cette poignée 1301 vers l'avant, dans le sens de la flèche 1306, elle coulisse horizontalement par rapport au cadre 1305 (représenté sur cette figure en traits pointillés), en entraînant, de façon synchrone, la portion supérieure 1307 et la portion inférieure 1308 de la lame 1302, et en conséquence les navettes auxquelles elles sont reliées dans la même direction. On comprend donc immédiatement qu'en repoussant la poignée vers l'arrière, les navettes se déplacent de façon synchrone dans le sens opposé, symbolisé par la flèche 1309.

Avantageusement, on peut également prévoir que la poignée est rotative et actionne un mécanisme de verrouillage, par exemple à pignon-crémaillère, pour assurer un blocage en toute position du panneau mobile dans au moins un des rails. Il peut également s'agir d'une poignée de verrouillage présentant deux portions pouvant être rapprochées l'une de l'autre par pincement entre le pouce et l'index.

### 7.7 Mode mode de réalisation

Selon le mode de réalisation de l'invention, la poignée de déverrouillage et d'actionnement du panneau mobile est formée sur la partie basse du cadre de ce dernier, et son déplacement se fait parallèlement au rail inférieur (dans d'autres applications, elle pourrait être mise en ouvre de façon similaire en partie supérieure du cadre).

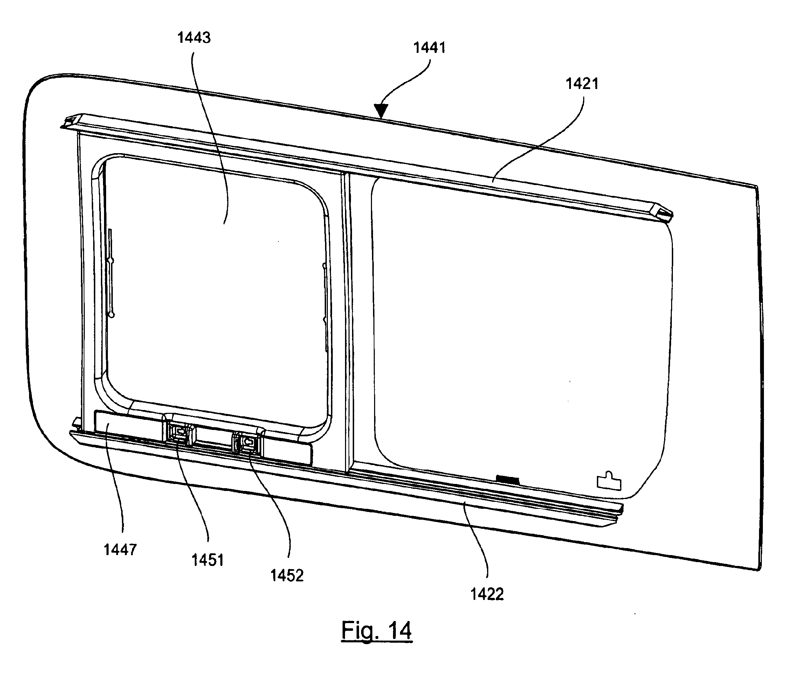

Les figures 14 à 18 illustrent ainsi un exemple de réalisation mettant en ouvre, de même que dans la figure 7, une liaison par une ou deux lames ressort, dites de synchronisation, ou clinquant(s). Le principe de la transmission du mouvement de la navette inférieure vers la navette supérieure via cette ou ces lame(s) ressort est identique à la technique décrite dans le deuxième mode de réalisation de la description et ne sera donc pas décrit plus en détail ici.

La poignée de déverrouillage et d'actionnement du panneau mobile 1443 présente deux portions (ou éléments de préhension) 1451, 1452 pouvant être rapprochées l'une de l'autre par pincement entre le pouce et l'index.

Les deux éléments de préhension 1451, 1452 sont montées dans un logement ménagé dans la partie basse 1447 du cadre du panneau mobile 1443 et sont mobiles par rapport à ce cadre, parallèlement à l'axe de déplacement du panneau mobile 1443, permettant ainsi d'assurer son déverrouillage et son coulissement le long des rails de guidage 1421, 1422.

Le panneau mobile 1443 permet donc d'obturer complètement l'ouverture ménagée dans l'ensemble fixe 1441 (comme illustré figure 14), et est prévu pour coulisser et libérer partiellement ou totalement cette ouverture. Dans la position d'obturation du panneau mobile 1443 représentée sur la figure 14, les deux éléments de préhension 1451, 1452 sont relâchés.

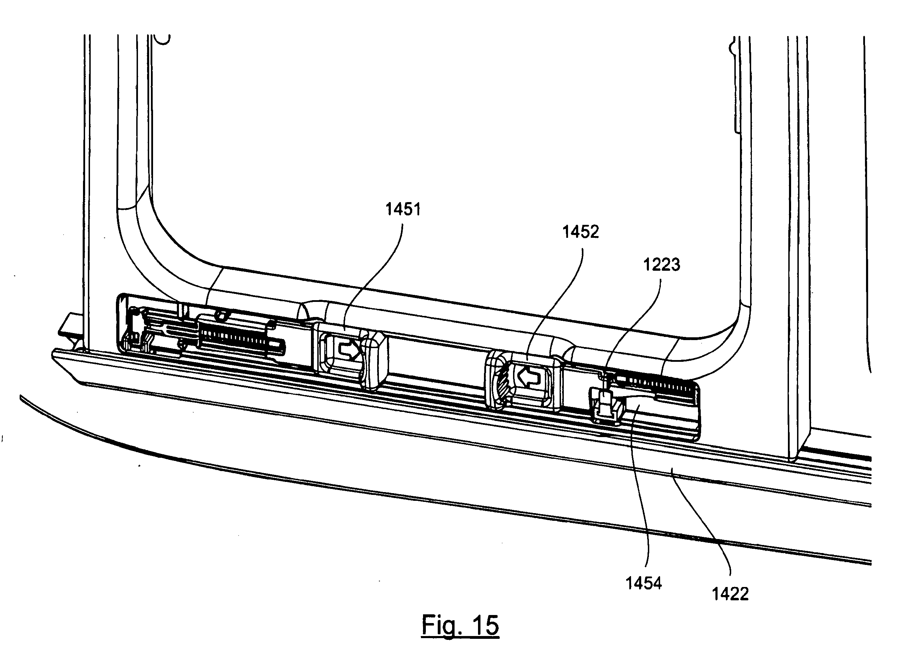

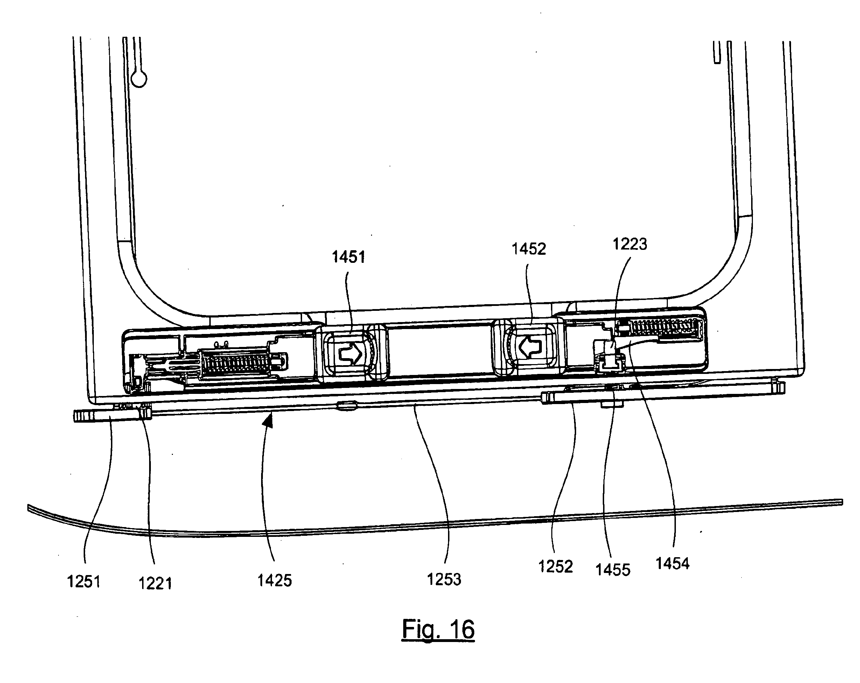

Les figures 15 et 16 sont des vues de détail de la partie basse 1447 du cadre du panneau mobile 1443 et du rail de guidage inférieur 1422, le panneau mobile 1443 étant en position d'obturation et les deux éléments de préhension 1451, 1452 étant relâchés.

Les deux éléments de préhension 1451, 1452 sont reliés chacun à un pion de guidage, seul le pion 1221 relié à l'élément de préhension 1451 étant représenté sur cette figure 14 et les suivantes, pour faciliter la lecture. Un pêne 1223 de verrouillage prend appui, sous l'action d'un ressort 1455, sur la surface inclinée d'un élément 1454 relié à l'élément de préhension 1452 et peut être déplacé perpendiculairement au rail de guidage 1422 par le biais de l'élément de préhension 1452. Sur les figures 15 et 16, ce pêne 1223 est en position basse et verrouille ainsi le panneau mobile 1443 en position d'obturation.

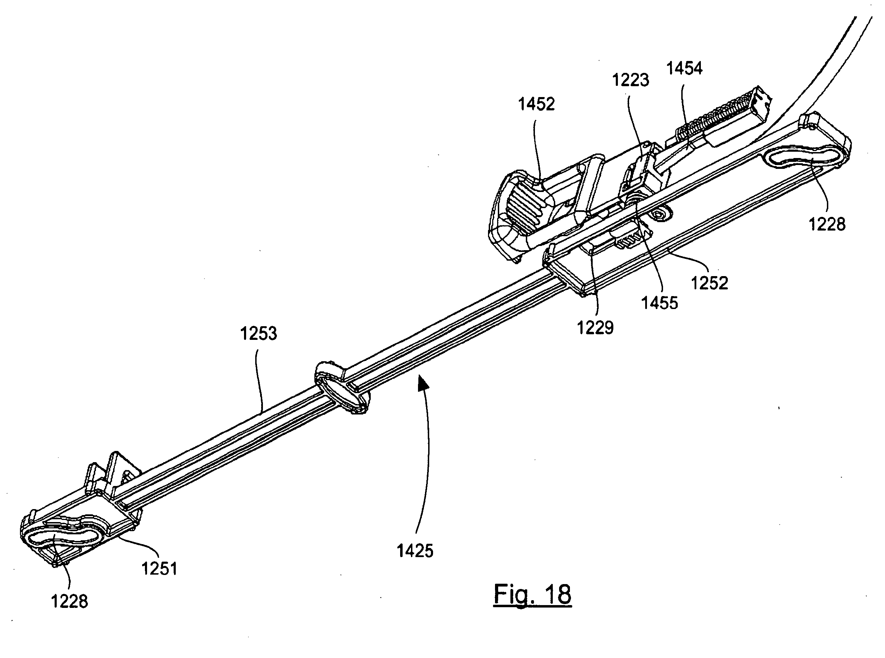

Un coulisseau 1425, formant navette au regard de la position du panneau coulissant 1443, est logé dans la glissière interne du rail 1422, sensiblement à l'aplomb du panneau coulissant, et peut coulisser dans la glissière du rail 1422. Il comprend deux patins de guidage 1251 et 1252, liés rigidement par une barre de liaison 1253, tel qu'illustré figure 18.

Une gorge de guidage 1228, ou piste de louvoiement, est formée dans chacun des patins 1251, 1252 pour recevoir la base de chaque pion de guidage. Ces gorges de guidage 1228 présentent, dans ce mode de réalisation, chacune une portion inclinée d'un angle égal à 45° par rapport à la direction de la glissière interne du rail 1422. D'autres formes de gorges sont envisagées comme, par exemple, une forme courbe.

Une gorge 1229 destinée à recevoir le pêne 1223 est formée dans le patin de guidage 1252.

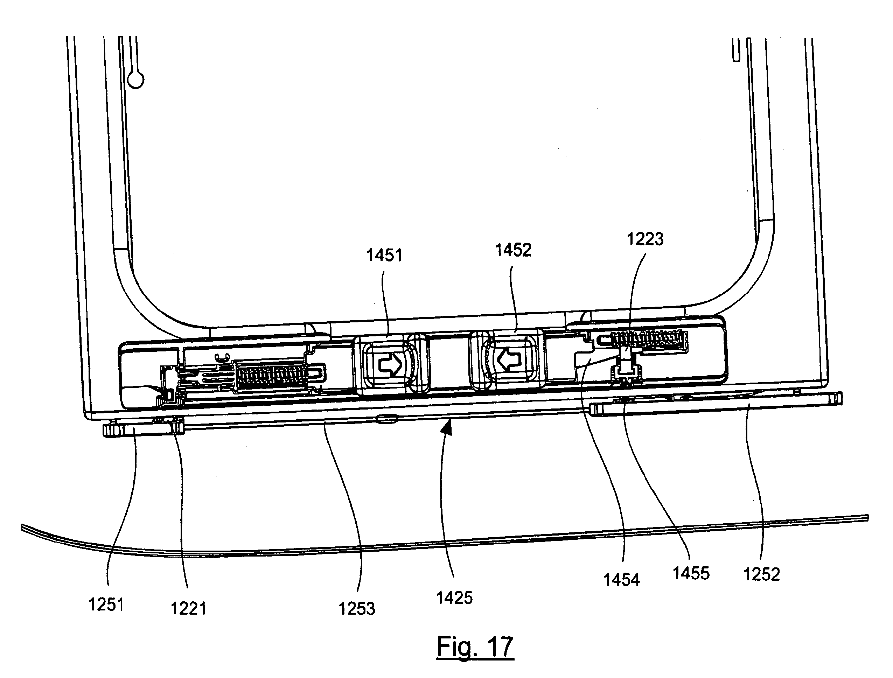

Lorsque les deux éléments de préhension 1451, 1452 sont rapprochés l'un de l'autre par pincement entre le pouce et l'index, comme représenté sur la figure 17, l'élément 1454 est déplacé dans la direction de l'élément de préhension 1452, en l'occurrence vers la gauche, et le pêne 1223, du fait qu'il prend appui contre la surface inclinée de l'élément 1454 et par l'action du ressort 1455, est déplacé vers le haut, déverrouillant ainsi le panneau mobile 1443. Les pions de guidage sont déplacés vers la droite par le biais du coulisseau ou navette 1425, comme illustré figure 17, le coulisseau ou navette 1425 pouvant dès lors se déplacer dans le rail de guidage 1422, à condition que les deux éléments de préhension 1451, 1452 soient maintenus rapprochés. Ainsi, en rapprochant les deux éléments de préhension 1451, 1452, le panneau mobile 1443 peut être déplacé dans une position de dégagement puis dans différentes positions d'ouverture le long du cadre fixe.

On dispose donc d'un mécanisme très ergonomique, l'utilisateur pouvant, dans un même mouvement (déplacement selon l'axe de coulissement), obtenir le déverrouillage puis le coulissement du panneau mobile (contrairement au cas où une poignée à deux éléments pouvant être rapprochés l'un de l'autre est monté verticalement).

Dans le cas où l'élément de préhension 1452 est relâché, celui-ci est, sous la force d'un ressort de rappel ramené vers la droite et, par conséquent, l'élément 1454 est déplacé dans la même direction, en l'occurrence vers la droite. Le pêne 1223, du fait qu'il prend appui contre la surface inclinée de l'élément 1454, est déplacé vers le bas, verrouillant ainsi le panneau mobile 1443. De ce fait, il est possible de verrouiller le panneau mobile dans différentes positions d'ouverture en relâchant l'élément de préhension 1452.

Comme indiqué ci-dessus, une telle poignée formée de deux éléments de préhension 1451, 1452 est particulièrement ergonomique et permet dans un même mouvement de déverrouiller et de déplacer le panneau mobile, également lorsque celui-ci est dans une position ouverte.

Comme souligné auparavant, des moyens de synchronisation assurant la transmission d'un actionnement transmis à la navette 1425 inférieure vers l'autre des navettes située dans le rail de guidage supérieur sont prévus entre la navette inférieure et la navette supérieure.

Dans des variantes de mise en oeuvre du mode de réalisation, on peut prévoir d'autres poignées montées en partie basse et/ou haute du cadre du panneau mobile.

## Revendications

1. Dispositif d'obturation d'une baie ménagée dans la carrosserie d'un véhicule automobile, comprenant une structure fixe (11, 41) dans laquelle est définie une ouverture (12), et au moins un panneau coulissant (13, 43, 1443) présentant :
- deux navettes (77, 78 ; 711, 712), dites navette supérieure et navette inférieure, guidées respectivement dans deux rails de guidage distincts (14, 15 ; 421, 1422, 1421, 1422) montés et/ou formés sur la face de ladite structure fixe tournée vers l'intérieur dudit véhicule respectivement en partie supérieure et en partie inférieure de ladite structure fixe ;
- un cadre (132, 46) portant au moins deux pions de guidage coopérant respectivement avec chacune desdites navettes (77, 78 ; 711, 712), ces dernières comprenant des moyens de guidage (28) desdits pions permettant un déplacement transversal dudit cadre (132) par rapport auxdites navettes (25) ;
- des moyens d'actionnement (71 ; 713 ; 62 ; 82 ; 92, 91 ; 102, 103) agissant sur lesdites navettes pour assurer un déplacement de ces dernières dans lesdits rails, entraînant un déplacement dudit panneau coulissant suivant une direction perpendiculaire au plan de ladite structure fixe,
**caractérisé en ce qu'**il comprend des moyens d'équilibrage desdits moyens d'actionnement, de façon à équilibrer le déplacement desdites navettes,
**en ce que** lesdits moyens d'actionnement comprennent au moins une poignée de déverrouillage et de déplacement placée sur une portion du cadre du panneau coulissant parallèle à au moins un desdits rails de guidage 1421, 1422, ladite poignée présentant deux éléments de préhension 1451, 1452 montés dans un logement ménagé dans la partie basse et/ou haute du cadre du panneau coulissant, mobiles l'un par rapport à l'autre et par rapport audit cadre parallèlement à l'axe de déplacement du panneau coulissant 13, 43, 1443 et pouvant prendre une position verrouillée, par défaut, et une position déverrouillée lorsqu'ils sont rapprochés l'un de l'autre,
lesdits moyens d'actionnement (71 ; 92, 91 ; 102, 103) assurant un actionnement direct sur une première desdites navettes (77, 78 ; 711, 712),
et **en ce que** lesdits moyens d'équilibrage comprennent des moyens de synchronisation (74) assurant une transmission d'un actionnement transmis sur la seconde desdites navettes.

2. Dispositif d'obturation selon la revendication 1, **caractérisé en ce qu'**il comprend des moyens de blocage dudit panneau coulissant en toutes positions d'ouverture, agissant sur lesdits moyens d'équilibrage.

3. Dispositif d'obturation selon l'une quelconque des revendications 1 et 2, **caractérisé en ce que** lesdits éléments de préhension sont reliés chacun à un pion de guidage.

4. Dispositif d'obturation selon l'une quelconque des revendications 1 à 3, **caractérisé en ce que** lesdits moyens de synchronisation comprennent au moins un élément appartenant au groupe comprenant les câbles push-pull, les lames ressorts, les clinquants.

5. Dispositif d'obturation selon l'une quelconque des revendications 1 à 4, **caractérisé en ce que** lesdits moyens d'actionnement (62 ; 82 ; 92, 91 ; 102, 103) sont entraînés par au moins un moteur électrique.

6. Véhicule automobile **caractérisé en ce qu'**il comprend au moins un dispositif d'obturation selon l'une des revendications 1 à 5.

## Patentansprüche

1. Vorrichtung zum Verschließen einer Öffnung, die in der Karosserie eines Kraftfahrzeugs ausgebildet ist und eine feste Struktur (11, 41), in welcher eine Öffnung (12) definiert ist, und mindestens eine gleitende Platte (13, 43, 1443) umfasst, welche aufweist:
- zwei Gleitstücke (77, 78; 711, 712), als oberes Gleitstück und unteres Gleitstück bezeichnet, die jeweils in einer von zwei verschiedenen Führungsschienen (14, 15; 421, 422, 1421, 1422) geführt werden, die an der dem Inneren des Fahrzeugs zugewandten Seite der festen Struktur im oberen Teil bzw. im unteren Teil der festen Struktur angebracht und/oder ausgebildet sind;
- einen Rahmen (132, 46), der mindestens zwei Führungsstifte trägt, die jeweils mit einem der Gleitstücke (77, 78; 711, 712) zusammenwirken, wobei diese Letzteren Führungsmittel (28) für die Stifte umfassen, die eine Querverschiebung des Rahmens (132) bezüglich der Gleitstücke (25) ermöglichen;
- Betätigungsmittel (71; 713; 62; 82; 92, 91; 102, 103), die auf die Gleitstücke einwirken, um eine Verschiebung dieser Letzteren in den Schienen sicherzustellen, welche eine Verschiebung der gleitenden Platte entlang einer zur Ebene der festen Struktur senkrechten Richtung zur Folge hat,
**dadurch gekennzeichnet, dass** sie Mittel zum Abgleichen der Betätigungsmittel umfasst, so dass die Verschiebung der Gleitstücke in Übereinstimmung gebracht wird, dadurch, dass die Betätigungsmittel mindestens einen Entriegelungs- und Verschiebegriff umfassen, der an einem Abschnitt des Rahmens der gleitenden Platte angeordnet ist, der zu mindestens einer der Führungsschienen (1421, 1422) parallel ist, wobei der Griff zwei Greifelemente (1451, 1452) aufweist, die in einer in dem unteren und/oder oberen Teil des Rahmens der gleitenden Platte ausgebildeten Aufnahme angebracht sind, relativ zueinander und bezüglich des Rahmens parallel zu der Verschiebungsachse der gleitenden Platte (13, 43, 1443) beweglich sind und eine verriegelte Position als normale Position und eine entriegelte Position, wenn sie aneinander angenähert sind, einnehmen können,
wobei die Betätigungsmittel (71; 92, 91; 102, 103) eine direkte Einwirkung auf ein erstes der Gleitstücke (77, 78; 711, 712) sicherstellen,
und dadurch, dass die Mittel zum Abgleichen Synchronisationsmittel (74) umfassen, die eine Übertragung einer übertragenen Betätigung auf das zweite der Gleitstücke sicherstellen.

2. Verschlussvorrichtung nach Anspruch 1, **dadurch gekennzeichnet, dass** sie Mittel zum Blockieren der gleitenden Platte in allen Öffnungspositionen umfasst, die auf die Mittel zum Abgleichen einwirken.

3. Verschlussvorrichtung nach einem der Ansprüche 1 und 2, **dadurch gekennzeichnet, dass** die Greifelemente jeweils mit einem Führungsstift verbunden sind.

4. Verschlussvorrichtung nach einem der Ansprüche 1 bis 3, **dadurch gekennzeichnet, dass** die Synchronisationsmittel mindestens ein Element umfassen, das zu der Gruppe gehört, welche die Schub- und Zugkabel, die Federblätter und die Metallfolien umfasst.

5. Verschlussvorrichtung nach einem der Ansprüche 1 bis 4, **dadurch gekennzeichnet, dass** die Betätigungsmittel (62; 82; 92, 91; 102, 103) von mindestens einem Elektromotor angetrieben werden.

6. Kraftfahrzeug, **dadurch gekennzeichnet, dass** es mindestens eine Verschlussvorrichtung nach einem der Ansprüche 1 bis 5 umfasst.

## Claims

1. Device for closing an opening arranged in the body of an automobile vehicle, said device comprising a fixed structure (11, 41) within which an aperture (12) is defined, and at least one sliding panel (13, 43, 1443) having:
- two shuttles (77, 78; 711, 712), referred to as the upper shuttle and the lower shuttle, which are guided, respectively, in two distinct guide rails (14, 15; 421, 422, 1421, 1422) which are mounted and/or formed on that face of said fixed structure which faces towards the interior of said vehicle, at the upper part and lower part, respectively, of the fixed structure;
- a frame (132, 46) carrying at least two guide pins which cooperate, respectively, with each of the shuttles (77, 78; 711, 712), these latter comprising means (28) for guiding the pins which allow transverse displacement of said frame (132) in relation to the shuttles (25);
- actuating means (71; 713; 62; 82; 92, 91; 102, 103) which act upon the shuttles in order to carry out displacement these latter within the rails, which gives rise to a displacement of the sliding panel in a direction perpendicular to the plane of the fixed structure,
**characterised in that** said device comprises means for counterbalancing the actuating means so as to balance the displacement of the shuttles,
**in that** the actuating means comprise at least one unlocking and displacing handle which is located on a portion of the sliding panel which is parallel to at least one of the guide rails (1421,1422), said handle comprising two gripping elements (1451, 1452) mounted in a housing made in the lower part and/or upper part of the frame of the sliding panel, said gripping elements being mobile relatively to each other and to the frame, in a direction parallel to the axis of movement of the sliding panel (13, 43, 1443), and said gripping elements can take a locked position, by default, and an unlocked position when they are brought closer to one another,
the actuating means (71; 92, 91; 102, 103) carrying out direct actuation on a first of the shuttles (77, 78; 711, 712),
and **in that** the counterbalancing means comprises synchronising means (74) which carry out transmission of an actuation transmitted to the second of the shuttles.

2. Closing device according to claim 1, **characterised in that** it comprises means for blocking the sliding panel in any opening positions, by acting upon the counterbalancing means.

3. Closing device according to either claims 1 or 2, **characterised in that** the gripping elements are each connected to a guiding pin.

4. Closing device according to any one of claims 1 to 3, **characterised in that** the synchronising means comprise at least one element belonging to the group comprising push-pull cables, leaf springs, metal foils.

5. Closing device according to any one of claims 1 to 4, **characterised in that** said means for actuating (62 ; 82 ; 92, 91 ; 102, 103) are driven by an eletrical engine.

6. Automobile vehicle, **characterised in that** it comprises at least one closing device according to any one of Claims 1 to 5.
